# EUROPÄISCHE PATENTANMELDUNG

(11) **EP 1 028 032 A2**
(43) Veröffentlichungstag der Anmeldung: **16.08.2000**
(21) Anmeldenummer: 00100561.0
(22) Anmeldetag: 12.01.2000
(51) Int. Cl.: B60R 16/02

(54) **Informationssystem für ein Fahrzeug**

(30) Priorität: 11.02.1999 DE 19905602
(71) Anmelder: ROBERT BOSCH GMBH, 70442 Stuttgart (DE)
(72) Erfinder: Siegle, Gert, 31139 Hildesheim (DE)

(57) **Zusammenfassung**

Die Erfindung betrifft ein Informationssystem für ein Fahrzeug, insbesondere ein Kraftfahrzeug, mit wenigstens einer Informationsquelle, über die codierte Informationssignale zu einem Informationsempfänger übertragbar sind, und mit einer fahrzeugfesten Auswerteeinheit, in der die codierten Informationssignale decodiert und in eine Sprachinformation gewandelt werden, und mit einer Wiedergabeeinrichtung für die Sprachinformation.

Es ist vorgesehen, daß die Auswerteeinheit (16) wenigstens einen Speicher (22) umfaßt, in dem ein Sprachwiedergabeprogramm (40) zur Decodierung und Wandlung der Informationssignale in Sprachsignale abgelegt ist.

## Beschreibung

Die Erfindung betrifft ein Informationssystem für ein Fahrzeug, insbesondere ein Kraftfahrzeug, mit den im Oberbegriff des Anspruchs 1 genannten Merkmalen.

### Stand der Technik

Informationssysteme für Fahrzeuge, insbesondere für Kraftfahrzeuge, der gattungsgemäßen Art sind bekannt. Hierbei wird von einer Informationsquelle ein codiertes Informationssignal an einen Informationsempfänger im Fahrzeug übertragen. Das codierte Informationssignal wird in einer Auswerteeinheit decodiert und weiterverarbeitet. Eine solche Auswerteeinheit ist beispielsweise Bestandteil eines Navigationssystems des Fahrzeuges. Die decodierten Informationen können dann über eine Wiedergabeeinrichtung, beispielsweise einen Lautsprecher, wiedergegeben werden und dienen der Information des Fahrers. Hierbei ist bei den bekannten Informationssystemen in einem Speicher ein vorgegebener Wortschatz abgelegt, dessen einzelne Wörter in Abhängigkeit von dem decodierten Informationssignal ausgelesen und in der Wiedergabeeinrichtung als ein akustisches Signal ausgegeben werden.

Nachteilig ist hierbei, daß in dem Speicher nur ein begrenzter Wortschatz abgelegt wird, das heißt, daß nur die dort hinterlegten Wörter wiedergegeben werden können. Des weiteren ist nachteilig, daß eine Aktualisierung des Wortschatzes aufwendig ist, da sie bei jedem einzelnen Fahrzeug durchgeführt werden muß.

Weiterhin ist nachteilig, daß aufgrund der Beschränktheit des abgelegten Wortschatzes dem Fahrer nur eine begrenzte Information akustisch zugänglich gemacht werden kann. So ist beispielsweise die Ansage einer Alternativroute in detaillierter Form, also mit Straßennamen, Ortsnamen usw., aufgrund der großen Variabilität nicht möglich.

### Vorteile der Erfindung

Das erfindungsgemäße Informationssystem für ein Fahrzeug hat den Vorteil, daß beliebige Informationssignale als akustische Signale ausgegeben werden können. Dadurch, daß die Auswerteeinheit wenigstens einen Speicher aufweist, in dem ein Sprachwiedergabeprogramm zur Decodierung und Wandlung der Informationssignale in Sprachsignale abgelegt ist, kann die vorhandene Limitierung der wiedergebbaren Sprachsignale überwunden werden.

Weiterhin ist es vorteilhaft, bereits in das Fahrzeug integrierte Informationssysteme zu nutzen. So kann beispielsweise die Übertragung der Informationssignale, die akustisch wiedergegeben werden sollen, während der Sendepausen bestehender Informationssysteme übertragen werden. Solche Systeme können beispielsweise sein RDS/TMC, DAB/DMB, GSM, UMTS, GSM-R oder TETRA.

Bei dem erfindungsgemäßen Informationssystem kann in vorteilhafter Weise ein beliebiges Informationssignal durch das Sprachwiedergabeprogramm in ein Sprachsignal umgewandelt werden, und damit entfällt die Notwendigkeit, den Wortschatz zu aktualisieren. Die übertragene Information kann zwischengespeichert werden und bei Bedarf von dem Fahrzeugführer abgefragt werden.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen näher erläutert. Es zeigen:
- Figur 1: ein schematisches Blockschaltbild eines Informationssystems;
- Figur 2: ein schematisches Blockschaltbild eines Ausführungsbeispiels und
- Figur 3: ein schematisches Blockschaltbild eines Informationssystems in Verbindung mit einem Navigationssystem.

### Beschreibung des Ausführungsbeispiels

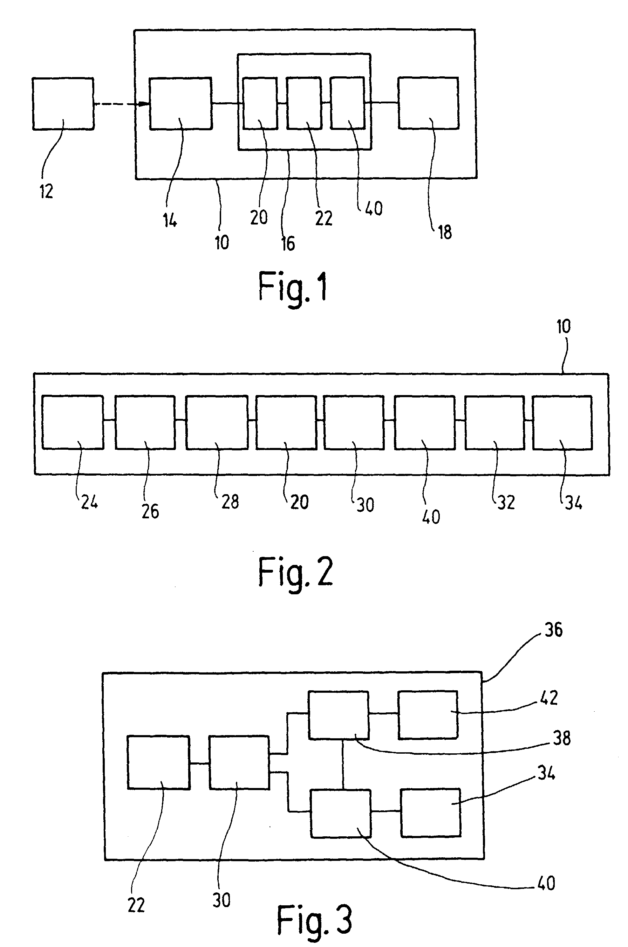

In Figur 1 ist ein Informationssystem 10 für ein Fahrzeug, insbesondere ein Kraftfahrzeug, in einem schematischen Blockschaltbild dargestellt. Das Informationssystem 10 umfaßt einen Informationsempfänger 14, eine Auswerteeinheit 16 und eine Wiedergabeeinrichtung 18. Eine Informationsquelle 12 sendet dabei codierte Informationssignale, vorzugsweise Funksignale, die von dem Informationsempfänger 14 des Fahrzeuges empfangen werden. Als Informationsempfänger 14 kann beispielsweise eine vorhandene Antenneneinrichtung zum Empfang von Rundfunksignalen oder Telekommunikationssignalen genutzt werden, oder es kann ein separater Informationsempfänger 14 installiert werden.

Die empfangenen Informationssignale werden in der Auswerteeinheit 16 in digitale Signale umgewandelt, und diese digitalen Signale werden mittels eines in einem Speicher 22 abgelegten Sprachwiedergabeprogramms 40 verarbeitet. Die Auswerteeinheit 16 umfaßt dabei in Abhängigkeit von der Codierung des Informationssignals variable elektronische Bauteile 20 mit wenigstens einem AD-Wandler. Dem AD-Wandler vorgeschaltet können beispielsweise Frequenzfilter, Verstärker oder Wandler sein.

Die empfangenen Informationssignale werden nach der Umwandlung in digitale Signale durch das Sprachwiedergabeprogramm 40 verarbeitet, das heißt, die digitalen Signale codieren die Schreibweise übermittelter Wörter und anhand dieser wird gemäß der im Programm hinterlegten phonetischen Regeln ein Sprachsignal erzeugt. Anschließend werden die Sprachsignale an eine Wiedergabeeinrichtung 18 übertragen. Eine solche Wiedergabeeinrichtung 18 kann ein Lautsprecher sein, der beispielsweise Bestandteil einer Radioanlage des Fahrzeuges ist. Gegebenenfalls werden die verarbeiteten Daten der Auswerteeinheit 16 über eine Soundkarte der Wiedergabeeinrichtung 18 übermittelt, um ein zur Wiedergabe geeignetes Format der Daten zu gewähren.

Die Figur 2 zeigt ein schematisches Blockschaltbild des Informationssystems 10, bei dem die für die Sprachwiedergabe genutzten codierten Informationssignale in den Sendepausen einer RDS/TMC codierten Informationsübertragung gesendet werden. Als Informationsempfänger 14 dient dabei der Radiowellenempfänger 24. Über einen geeigneten Frequenzfilter 26 werden dabei codierte Informationssignale im Bereich von 57 kHz herausgefiltert und nachfolgend in einem AD-Wandler 28 in digitale Signale umgewandelt. Mittels eines digitalen Filters 30 werden dann die RDS/TMC Signale separiert und in bekannter Weise beispielsweise über ein Display wiedergegeben. Die verbleibenden digitalen Signale können in einem beliebigen Format vorliegen, vorzugsweise als ASCII-Zeichen. Sie werden durch ein in dem Speicher 22 hinterlegtes Sprachwiedergabeprogramm 40 bearbeitet, und die verarbeiteten Daten werden über eine Soundkarte 32 an einen Lautsprecher 34 als Sprachsignale übertragen.

Analog der in Figur 2 beschriebenen Separation und Auswertung der codierten Informationssignale sowie deren Verarbeitung durch das Sprachwiedergabeprogramm 40 kann das erfindungsgemäße Informationssystem 10 auch bei der Übertragung mit anderen Systemen als dem RDS/TMC-System genutzt werden. So ist eine Übertragung des codierten Informationssignals auch unter den Systemen GSM, UMTS, GSM-R, DAB/DMB, TETRA oder dergleichen sowie als ein Zusatzmodul bei den bekannten Übertragungen mittels Mobiltelefon oder im Fernsehband möglich. Zur Separation der Informationssignale sind dabei unterschiedliche elektronische Bauteile 20 und/oder digitale Filter 30 notwendig. Wichtig dabei ist lediglich, daß die Informationssignale in digitale Signale umgewandelt werden, die von dem Sprachwiedergabeprogramm 40 verarbeitbar sind.

In bevorzugter Weise kann die Sprachwiedergabe der Informationssignale mit einem in dem Fahrzeug vorhandenen Navigationssystem gekoppelt werden. Die Figur 3 zeigt in schematischer Weise ein solches Navigationssystem 36. Dabei werden die Informationssignale, die von einer Informationsquelle 12 ausgesendet werden, wie beschrieben in digitale Signale umgewandelt und dem Speicher 22 zugeführt. Durch geeignete digitale Filter 30 werden die Signale, die zur Steuerung eines Navigationsprogrammes 38 dienen, herausgefiltert. Die restlichen Daten werden in dem Sprachwiedergabeprogramm 40 in bereits geschilderter Art und Weise bearbeitet und an einen Lautsprecher 34 weitergegeben, wo sie als akustisches Signal wiedergegeben werden. Das Navigationsprogramm 38 erhält beispielsweise Daten über die Beschaffenheit, Lage und Typ einzelner Straßen und vergleicht eine durch das Informationssignal gemeldete Verkehrssituation mit einem durch den Fahrer eingegebenen Fahrziel. Gegebenenfalls wird dann eine Alternativroute vorgeschlagen. Diese wird einerseits durch einen Monitor 42 angezeigt und andererseits als ein digitales Signal in einem geeigneten Format dem Sprachwiedergabeprogramm 40 zur Verfügung gestellt. Auf diese Weise kann die Alternativroute auch akustisch über den Lautsprecher 34 wiedergegeben werden.

## Patentansprüche

1. Informationssystem für ein Fahrzeug, insbesondere ein Kraftfahrzeug, mit wenigstens einer Informationsquelle, über die codierte Informationssignale zu einem Informationsempfänger übertragbar sind, und mit einer fahrzeugfesten Auswerteeinheit, in der die codierten Informationssignale decodiert und in eine Sprachinformation gewandelt werden, und mit einer Wiedergabeeinrichtung für die Sprachinformation, **dadurch gekennzeichnet**, daß die Auswerteeinheit (16) wenigstens einen Speicher (22) umfaßt, in dem ein Sprachwiedergabeprogramm (40) zur Decodierung und Wandlung der Informationssignale in Sprachsignale abgelegt ist.

2. Informationssystem nach Anspruch 1, **dadurch gekennzeichnet**, daß die codierten Informationssignale Funksignale sind.

3. Informationssystem nach Anspruch 2, **dadurch gekennzeichnet**, daß die Auswerteeinheit (16) elektronische Bauteile (20) umfaßt, die zur Separation, Verstärkung und Wandlung der Funksignale in digitale Signale genutzt werden.

4. Informationssystem nach Anspruch 3, **dadurch gekennzeichnet**, daß die Wiedergabeeinrichtung (18) ein Lautsprecher (34) ist.

5. Informationssystem nach Anspruch 4, **dadurch gekennzeichnet**, daß der Informationsempfänger (14) Teil einer Antenneneinrichtung zum Empfang von Rundfunksignalen oder Telekommunikationssignalen ist.

6. Informationssystem nach Anspruch 5, **dadurch gekennzeichnet**, daß das codierte Informationssignal während einer Sendepause und/oder während der Übersendung von verschiedenartig codierten Informationssignalen für weitere Informationssysteme übertragen wird.

7. Informationssystem nach Anspruch 6, **dadurch gekennzeichnet**, daß als weitere Informationssysteme RDS/TMC, DAB/DMB, GSM, UMTS, GSM-R, TETRA oder dergleichen genutzt werden.

8. Informationssystem nach Anspruch 7, **dadurch gekennzeichnet**, daß das weitere Informationssystem ein Navigationssystem umfaßt.

9. Informationssystem nach Anspruch 8, **dadurch gekennzeichnet**, daß das Navigationssystem in Abhängigkeit von einem durch den Fahrzeugführer eingegebenen Fahrziel und einer durch das Informationssignal übermittelten Verkehrssituation eine Alternativroute ermittelt und anzeigt, und diese Alternativroute gleichzeitig als ein für die Verarbeitung in dem Sprachwiedergabeprogramm (40) geeignetes Informationssignal ausgegeben wird.

10. Informationssystem nach Anspruch 9, **dadurch gekennzeichnet**, daß das Sprachwiedergabeprogramm (40) das Informationssignal in ein Sprachsignal wandelt, und dieses Sprachsignal über die Wiedergabeeinrichtung (18) als akustisches Signal ausgegeben wird.
